(19) Europäisches Patentamt
European Patent Office
Office européen des brevets

(11) **EP 1 742 175 A1**

(12) **EUROPÄISCHE PATENTANMELDUNG**

(43) Veröffentlichungstag:
**10.01.2007 Patentblatt 2007/02**

(51) Int Cl.:
***G06Q 10/00*** *(2006.01)*

(21) Anmeldenummer: 05106173.7

(22) Anmeldetag: **07.07.2005**

(84) Benannte Vertragsstaaten:
**AT BE BG CH CY CZ DE DK EE ES FI FR GB GR HU IE IS IT LI LT LU LV MC NL PL PT RO SE SI SK TR**
Benannte Erstreckungsstaaten:
**AL BA HR MK YU**

(71) Anmelder: **Citypreishits AG**
**80335 München (DE)**

(72) Erfinder: **Wepner, Thomas**
**80335, München (DE)**

(74) Vertreter: **Schneider, Günther Martin et al**
**Bettinger Schneider Schramm,**
**Patent- und Rechtsanwälte,**
**Postfach 86 02 67**
**81629 München (DE)**

(54) **Verfahren und Vorrichtung zum Ermitteln von standortbezogenen Produktinformationen**

(57)     Verfahren und Vorrichtung zum rechnergestützten Ermitteln von Produktinformation gemäß einer Anfrage eines Informationssuchenden aus einer Vielzahl von Produktinformationen, die von einer Vielzahl von Produktanbietern in Verbindung mit den Standorten der jeweiligen Produktanbieter bereitgestellt werden, aufweisend:

Empfangen einer Anfrage eines Informationssuchenden, wobei die Anfrage eine gewünschte Produktinformation und einen Standort kennzeichnet;

Ableiten des Standortes aus der Anfrage;

Ermitteln der Produktanbieter in der Datenbank, deren Standorte innerhalb einer vorbestimmten Umgebung zu dem abgeleiteten Standort liegen;

Suchen der gewünschten Produktinformation in der Datenbank aus den von den ermittelten Produktanbietern bereitgestellten Produktinformationen; und

Senden der gefundenen Produktinformationen in Verbindung mit den ermittelten Produktanbietern der Produktinformation an den Informationssuchenden.

Fig. 6

**Beschreibung**

Die Erfindung betrifft ein Verfahren, eine Vorrichtung und ein Computerprogrammprodukt zum Ermitteln von Produktinformationen gemäß einer Anfrage eines Informationssuchenden, wobei die Anfrage den Standort des Informationssuchenden aufweist, wobei die Produktinformationen von einer Vielzahl von Produktanbietern bereitgestellt werden und wobei die Standorte jedes Produktanbieters und der Standort des Informationssuchenden als Koordinaten eines vorbestimmten Koordinatensystems bestimmbar sind.

Heutzutage liest ein Kaufinteressent Zeitungen, Anzeigenblätter oder Prospekte, um sich über aktuelle Produktangebote zu informieren oder die für ihn interessanten Angebote zu finden. Diese Art der Recherche setzt voraus, dass der Kaufmteressent Zugang zu allen für ihn relevanten Zeitungen, Anzeigenblättern oder Prospekten hat. Zudem ergibt sich für den Kaufinteressenten ein für ihn eingeschränktes Angebot, da beispielsweise Anzeigenblätter und Prospekte nicht täglich neu aufgelegt werden und dessen Informationen somit sehr schnell veralten.

Zunehmend bedient sich der Kaufinteressent hierfür auch des Internets. Die Nutzung des Internets erlaubt es dem Kaufinteressenten zwar nach speziellen Angeboten zu suchen. Doch auch hierbei ist es nachteilig, dass die angebotenen Informationen zu den Produkten meist nicht dem aktuellen Stand entsprechen. Nachteilig ist ferner, dass eine Recherche im Internet sehr zeitaufwändig ist, da die angebotenen Informationen zumeist unstrukturiert sind und kaum individuell auf die Bedürfnisse eines Kaufinteressenten zugeschnitten werden können.

Bei beiden vorgenannten Varianten ist es nicht möglich, dass ein Kaufinteressent Produktangebote gezielt in seiner Umgebung am aktuellen Tag finden kann.

Aufgabe der vorliegenden Erfmdung ist es daher, ein Verfahren und eine Vorrichtung bereitzustellen, welches die genannten Nachteile zumindest teilweise vermeidet.

Diese Aufgabe wird mit dem Verfahren gemäß Anspruch 1,. der Vorrichtung gemäß Anspruch 16 bzw. dem Computerprogrammprodukt gemäß Anspruch 17 gelöst.

Erfindungsgemäß bereitgestellt wird demnach ein Verfahren zum rechnergestützten Ermitteln von Produktinformationen gemäß einer Anfrage eines Informationssuchenden aus einer Vielzahl von Produktinformationen, die von einer Vielzahl von Produktanbietern in Verbindung mit den Standorten der jeweiligen Produktanbieter bereitgestellt werden, wobei das Verfahren die folgenden Schritte auf weist:

- Empfangen einer Anfrage eines Informationssuchenden, wobei die Anfrage eine gewünschte Produktinformation und einen Standort kennzeichnet;
- Ableiten des Standortes aus der Anfrage;
- Ermitteln der Produktanbieter in der Datenbank, deren Standorte innerhalb einer vorbestimmten Umgebung zu dem abgeleiteten Standort liegen;
- Suchen der gewünschten Produktinformation in der Datenbank aus den von den ermittelten Produktanbietern bereitgestellten Produktinformationen; und
- Senden der gefundenen Produktinformationen in Verbindung mit den ermittelten Produktanbietern der Produkte an den Informationssuchenden.

Das erfindungsgemäße Verfahren bringt zahlreiche Vorteile mit sich. Ein Vorteil des Verfahrens ist, dass der Informationssuchende als Suchergebnis genau jene Produktinformationen zur Verfügung gestellt bekommt, welche seinen Wünschen entsprechen und in seiner unmittelbarer Umgebung zu finden sind.

Das Verfahren zeichnet sich des Weiteren durch eine einfache Bedienbarkeit aus, die es dem Informationssuchenden ermöglicht, eine Anfrage einfach und schnell abzusetzen.

Weitere Aspekte der Erfindung ergeben sich aus den Unteransprüchen.

Der Standort des Informationssuchenden und der Produktanbieter kann optional mittels mindestens einer der folgenden Angaben abgeleitet werden:

- Adresse;
- Koordinaten eines vorbestimmten Koordinatensystems;
- Landkarte.

Ein Standort kann auch auf der Basis eines geographisches Koordinatensystems, eines Gauß-Krüger-Koordinatensystem, eines UTM-Koordinatensystems und/oder eines WGS84-Koordinatensystems abgeleitet werden.

Da durch das Verfahren für die Angabe des Standortes des Informationssuchenden mehrere Möglichkeiten zur Verfügung gestellt werden, ist gewährleistet, dass auch nicht ortskundige Personen das Verfahren anwenden können. Die Verwendung unterschiedlicher Koordinatensystem gewährleistet zudem, dass Informationssuchende aus unterschiedlichen geographischen Regionen unterschiedliche Koordinatensysteme verwenden können. So kann ein Europäer etwa das in Europa übliche Gauß-Krüger-Koordinatensystem bevorzugen, während ein Australier etwa das geographische Koordinatensystem verwendet.

Die Standorte der Produktanbieter werden in einem vordefinierten Format, vorzugsweise als GPS-Koordinaten, bereitgestellt. GPS-Koordinaten werden durch das WGS84-Koordinatensystems beschrieben. Das Verfahren stellt Mittel zur Verfügung, um die unterschiedlichen Möglichkeiten der Angabe eines Standortes in GPS-Koordinaten umzurechnen. Die so erzeugten GPS-Koordinaten sind dann mit den GPS-Koordinaten der Produktanbieter vergleichbar. Als Basis für den Standortvergleich sind auch kartesische Koordinaten oder die Koordinaten gemäß dem Galileo-Navigationssystem verwendbar.

Ferner kann die Anfrage weitere Suchkriterien zur Einschränkung der Suche auf weisen.

Das Ermitteln der Produktinformationen für jeden Produktanbieter aus der Liste gefundener Produktanbieter kann folgende Unterschritte umfassen:

- Lesen der Produktinformationen des Produktanbieters in der Datenbank;
- Überprüfen für jede gelesene Produktinformation, ob diese den Suchkriterien gemäß der Anfrage entspricht;
- Aufnehmen der Produktinformation in eine Liste gefundener Produktinformationen, sofern die gelesene Produktinformation den Suchkriterien entspricht.

Die Anfrage kann die Spezifizierung der Umgebung für die Suche aufweisen.

Bei Berücksichtung der Umgebung, die bei der Suche verwendet wird, weist das Verfahren den Vorteil auf, dass eine standortbezogene Suche nach Produktinformationen durchgeführt werden kann. Des Weiteren kann das Suchergebnis anhand zusätzlicher Suchkriterien weiter eingeschränkt werden. Der Informationssuchende findet so genau die für ihn interessanten Produkte in seiner Umgebung. Der Mehrwert einer solchen Suche gegenüber den genannten herkömmlichen Verfahren liegt zumindest darin, dass der Informationssuchende sich nur mehr mit jenen Produktinformationen auseinandersetzen muss, welche er durch die von ihm definierten Anfrage als relevant definiert hat. Ein Relevanzkriterium ist hierbei, dass sich die Händler, die die gesuchten Produkte anbieten, in der näheren, von ihm definierten, Umgebung befinden.

Der Informationssuchende kann sich durch Angabe von Sortierkriterien das Suchergebnis sortieren lassen.

Wird in der Anfrage kein Umkreis angegeben, so wird durch das Verfahren ein voreingestellter Umkreis verwendet. Ein unüberschaubar langes Suchergebnis wird dadurch vermieden.

Die Umgebung kann durch Angabe von maximaler Entfernung, maximaler Fahrzeit, und/oder maximaler Gehzeit spezifizierbar sein.

Der besondere Vorteil der Verwendung unterschiedlicher Größen (also Zeit oder Entfernung) für die Angabe des Umkreises oder der Umgebung liegt darin, dass der Informationssuchende den Umkreis, in dem die Suche durchgeführt werden soll, an seine Mobilität anpassen kann. So kann etwa ein Informationssuchender, der mit einem Fahrzeug unterwegs ist, den Umkreis in Fahrzeit, und ein Fußgänger in Gehzeit angeben.

Der Produktanbieter kann die Produktdaten seiner angebotenen Produkte selbst anlegen, ändern oder löschen, sofern er dazu berechtigt ist. Durch den direkten Zugriff auf die Daten wird gewährleistet, dass die verfügbaren Produktdaten nach Möglichkeit immer aktuell sind. Ein weiterer Vorteil ist, dass der Produktanbieter die Daten synchron zu den Änderungen, etwa in seinem Warenwirtschaftssystem, vornehmen kann.

Das Verfahren kann sowohl von einem stationären Computer (fixes Endgerät) als auch von einem mobilen Endgerät aus betrieben werden. Die Unterstützung mobiler Endgeräte erlaubt es dem Informationssuchenden, ad-hoc-Anfragen durchzuführen. Weist das mobile Endgerät eine Vorrichtung zur automatischen Bestimmung des Standortes auf, etwa ein GPS-Modul, so kann eine solche ad-hoc-Anfrage sogar ohne Kenntnis des Standortes durchgeführt werden, z.B. wenn man sich in einer fremden Stadt befindet. Der Informationssuchende kann sich auch die Route zwischen seinem Standort und dem Standort des Produktanbieters des Produktes darstellen lassen. So kann man die Geschäfte, welche ein Angebot bereitstellen, auch finden. Weist das mobile Endgerät ein Navigationssystem auf, so kann der Standort des Produktanbieters in das Navigationssystem übernommen werden. Mit Hilfe des Navigationssystems kann der Informationssuchende dann den schnellsten oder kürzesten Weg zum Produktanbieter finden.

Durch die statistische Auswertung erhält der Produktanbieter Informationen etwa zum Kaufverhalten der Informationssuchenden oder welche Produkte besonders oft oder besonders selten abgefragt werden. Der Produktanbieter kann mit diesen Informationen den Vertrieb und das Marketing der Produkte zielgerechter ausrichten.

Die Erfindung wird anhand der Zeichnung und eines Ausführungsbeispiels näher beschrieben. In der Zeichnung zeigen:

Fig. 1          einen Überblick über das erfindungsgemäße Verfahren;
Fig. 2, 2a, 2b  eine schematische Darstellung zweier Umkreise bezüglich eines Standortes;
Fig. 3          ein Flussdiagramm des erfindungsgemäßen Verfahrens;
Fig. 4          ein Flussdiagramm zum Ermitteln der Koordinaten des Standortes;
Fig. 5          ein Flussdiagramm für die Bereitstellung der Produktinformationen;

Fig. 6          ein E/R- Diagramm des zugrunde liegenden Datenmodells;
Fig. 7          ein kartesisches Koordinatensystem zur Berechnung des Umkreises;
Fig. 8          ein Blockdiagramm des erfmdungsgemäßen Verfahrens; und
Fig. 9          ein Ablaufdiagramm einer statistischen Auswertung.

Durch die Erfindung wird ein Verfahren bereitgestellt, mit Hilfe dessen ein Informationssuchender schnell und effizient Produktangebote in seiner von ihm definierten Umgebung finden kann. Das Verfahren stellt für die Suche nach Produktangeboten einen flexiblen Zugriff auf die Produkte zur Verfügung, um über Engeräte unterschiedlichen Typs, beispielsweise Computer mit herkömmlichem Internetbrowser, Mobiltelefone mit WAP-Browser, Handhelds oder PDA's, die Suche durchführen zu können.

Die Produktangebote werden von einem hier sogenannten Vermittler bereitgestellt. Der Vermittler verwaltet die Produktangebote, welche von verschiedenen Produktanbietern bereitgestellt werden. Den Produktanbietern wird durch die Erfindung eine Schnittstelle zum effizienten Einpflegen ihrer Produktangebote bereitgestellt. Bei Bedarf können die beim Vermittler gespeicherten Produktangebote auch in Echtzeit von den Produktanbietern auf den aktuellen Stand gebracht werden. Dadurch können die Produktanbieter besonders schnell auf sich ändernde Bedingungen, beispielsweise hinsichtlich der Verfügbarkeit oder des Preises eines Produktes, reagieren. Ein weiterer Vorteil des Verfahrens ist, dass der Vermittler das Bereitstellen der Produktangebote bei den Produktanbietern verrechen kann.

Unter dem Begriff "Produktanbieter" soll auch ein Anbieter lediglich der Information über das Produkt verstanden werden. "Produkte" sollen auch Dienstleistungen umfassen.

Durch die Verknüpfung des Standortes des Informationssuchenden mit den Standorten der Produktanbieter der Produkte kann der Informationssuchende eine standortbezogene Suche nach Produktangeboten durchführen. Die Standorte werden durch Koordinaten eines vorbestimmten Koordinatensystems repräsentiert.

Das Koordinatensystem kann dabei ein geographisches Koordinatensystem, ein Gauß-Krüger-Koordinatensystem, ein UTM-Koordinatensystem oder ein WGS84-Koordinatensystem sein. Beim geographisches Koordinatensystem erfolgt die Angabe der Koordinaten in Längen- und Breitengraden unter zusätzlicher Angabe von Bogenminuten und Bogensekunden beispielsweise 47° 25' 10" Nord (Breitengrad) und 11° 10' 17" Ost (Längengrad). Das WGS84-Koordinatensystem (World Geodetic System 1984) bildet die Grundlage des GPS-Systems, des NAVSTAR-Satellitennavigationssystems (Navigational Satellite Timing and Ranging - Global Positioning System). Alternativ oder zusätzlich können die Standorte auch durch Koordinaten des zum NAVSTAR-Satellitennavigationssystem kompatiblen Galileo-Satellitennavigationssystem repräsentiert werden.

Auch Koordinaten aus einem kartesischen Koordinatensystem können eingesetzt werden.

In den folgenden Ausführungsformen wird jeweils das WGS84-Koordinatensystem zugrunde gelegt. Die Koordinaten der Standorte sind jeweils als GPS-Koordinaten angegeben. Selbstverständlich können die anderen erwähnten Geoinformationssysteme wie z.B. Galileo ebenfalls verwendet werden.

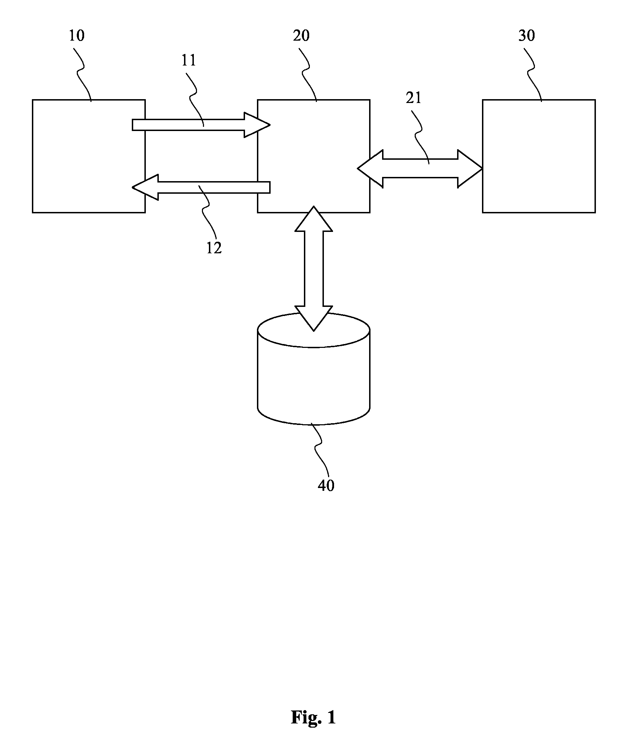

Fig.1 zeigt einen Überblick über das erfmdungsgemäße Verfahren. Ein Produktanbieter 30, beispielsweise ein Händler, stellt einem Vermittler 20 aktuelle Angebote über die von ihm vertriebenen Produkte oder Dienstleistungen zur Verfügung. Dem Produktanbieter 30 wird dafür eine Zugriffsmöglichkeit 21 auf seine Daten beim Vermittler 20 bereitgestellt. Über diese Zugriffsmöglichkeit 21 kann der Produktanbieter 30 seine Daten beim Vermittler 20 pflegen. Des Weiteren kann er unter Verwendung dieser Zugriffsmöglichkeit 21 dem Vermittler 20 neue Daten zur Verfügung stellen bzw. direkt anlegen. Die bereitgestellten Daten zu den Produkten oder Dienstleistungen werden in einer Datenbank 40 gespeichert.

Zusätzlich zu den Daten der Produkte stellt der Produktanbieter 30 auch seine Adressdaten, wie etwa Straße und Hausnummer, Name des Geschäftes und Öffnungszeiten, dem Vermittler 20 zur Verfügung.

Ein Informationssuchender 10, beispielsweise ein Interessent oder potentieller Kunde auf der Suche nach Angeboten in seiner Nachbarschaft bzw. Umgebung, schickt über einen herkömmlichen Computer, welcher über ein Kommunikationsnetzwerk, z.B. das Internet, mit dem Vermittler 20 verbunden ist, oder über ein mobiles Endgerät, etwa ein Mobiltelefon, eine Anfrage 11 an den Vermittler. Vorzugsweise enthält die Anfrage den Standort des Informationssuchenden 10 und einen Umkreis um den Standort. Der Standort muss nicht dem aktuellen Standort des Informationssuchenden 10 entsprechen, zum Beispiel, wenn eine Suche nach Produkten in einer anderen Stadt durchgeführt werden soll. Die Umgebung gibt dabei die Fläche an, in welcher nach angebotenen Produkten oder Dienstleistungen gesucht werden soll. Vorzugsweise kann der Umkreis durch Angabe von maximaler Entfernung, maximaler Fahrzeit, maximaler Gehzeit oder einer Kombination aus diesen festgelegt werden. Wird die Umgebung nicht angegeben, so wird ein vom System vorbestimmter Umkreis verwendet. Die abgedeckte Fläche, welche durch maximale Entfernung, maximale Fahrzeit, maximale Gehzeit oder einer Kombination aus diesen abgedeckt wird, wird durch den Vermittler 20 bestimmt.

In einer bevorzugten Ausführungsform weist der Computer oder das mobile Endgerät eine Vorrichtung zur automatischen Ermittlung des Standortes des Informationssuchenden 10 auf. Die automatische Ermittlung des Standortes kann dabei satellitengestützt oder durch Einsatz terrestrischer Vorrichtungen erfolgen.

In einer Ausführungsform weist die Vorrichtung zur automatischen Ermittlung des Standortes ein GPS-Modul auf, welches satellitengestützt automatisch den aktuellen Standort des Informationssuchenden 10 ermittelt. Bei dieser Ausführungsform muss der Informationssuchende 10 seinen aktuellen Standort nicht manuell angeben. Der von dem GPS-Modul automatisch ermittelte Standort wird in Form entsprechender Koordinaten zusammen mit der Anfrage 11 an den Vermittler 20 geschickt. Handelt es sich bei einem mobilen Endgerät um ein Gerät mit integriertem Mobiltelefon, so kann der Standort auch über das Mobilfunknetz ermittelt werden.

Der Vermittler 20 nimmt die Anfrage 11 des Informationssuchenden 10 entgegen und verarbeitet diese, indem er die in der Datenbank 40 gespeicherten Produktinformationen gemäß der Anfrage 11 durchsucht.

Das Ergebnis der Anfrage 11 wird dem Informationssuchenden 10 zugesandt, vgl. Pfeil 12. Vorzugsweise erhält der Informationssuchende 10 dabei eine Webseite mit einer Liste der gefundenen Angebote. Die Webseite wird vor dem Versand so aufbereitet, dass sie am Computer oder am mobilen Endgerät des Informationssuchenden 10 darstellbar ist. Alternativ kann sich der Informationssuchende 10 das Ergebnis seiner Anfrage 11 auch in Form einer elektronischen Nachricht, beispielsweise eine e-Mail oder SMS, zuschicken lassen.

Auf diese Weise kann ein Informationssuchender 10 nach Angeboten, welche von Händlern in seiner Nähe, beispielsweise im Umkreis von 2 Kilometern, angeboten werden, recherchieren lassen.

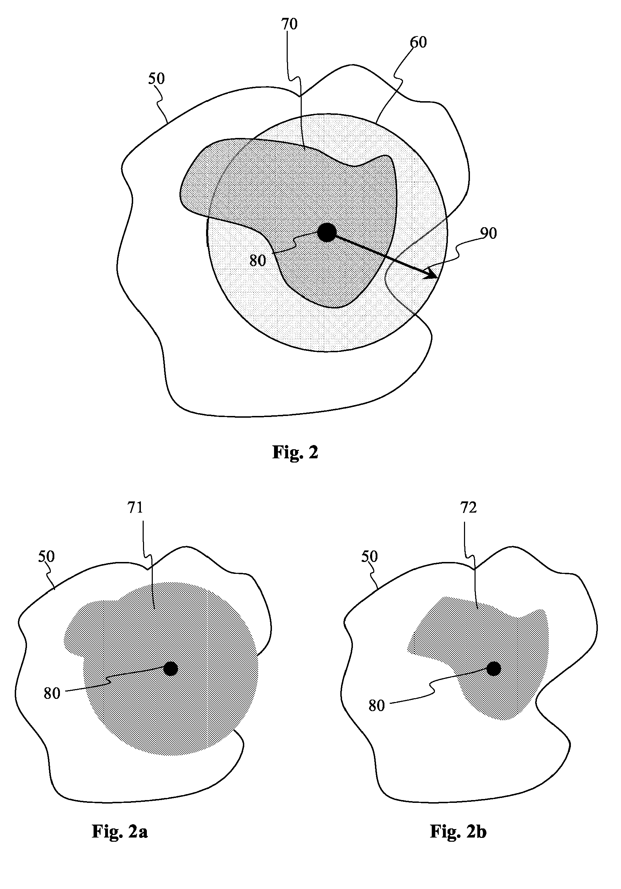

Fig. 2 zeigt eine schematische Darstellung zweier Umgebungen 60 und 70 bezüglich des Standortes 80 eines Informationssuchenden. Die gezeigte Fläche 50 repräsentiert ein Stadtgebiet, in dem sich der Informationssuchende aufhält. Gibt der Informationssuchende seine Umgebung durch Angabe der maximalen Entfernung 90 an, so werden bei der Suche nach Angeboten alle Produktanbieter innerhalb der durch die Umgebung 60 abgedeckten Fläche ermittelt. Bei der Angabe etwa der maximalen Fahrzeit werden bei der Suche nach Angeboten alle Produktanbieter innerhalb der durch die Umgebung 70 abgedeckten Fläche ermittelt.

Wird die Umgebung durch eine Kombination von beiden angegeben, werden bei der Suche nach Angeboten alle Produktanbieter innerhalb der durch die Kombination der Umkreise 60 und 70 abgedeckten Fläche ermittelt.

Fig. 2a zeigt die Umgebung 71 bei Angabe einer ODER-Kombination von maximaler Entfernung und maximaler Fahrzeit, z.B. alle Produktanbieter innerhalb einer maximalen Entfernung von zwei Kilometer oder einer maximalen Fahrzeit von 15 Minuten.

Fig. 2b zeigt die Umgebung 72 bei Angabe einer UND-Kombination von maximaler Entfernung und maximaler Fahrzeit, z.B. alle Produktanbieter innerhalb einer maximalen Entfernung von 2 Kilometer und einer maximalen Fahrzeit von 15 Minuten.

In einer weiteren Ausführungsform können zur Ermittlung der abgedeckten Fläche durch den Vermittler weitere Informationen, beispielsweise Verkehrsdurchsagen wie Staumeldungen, herangezogen werden.

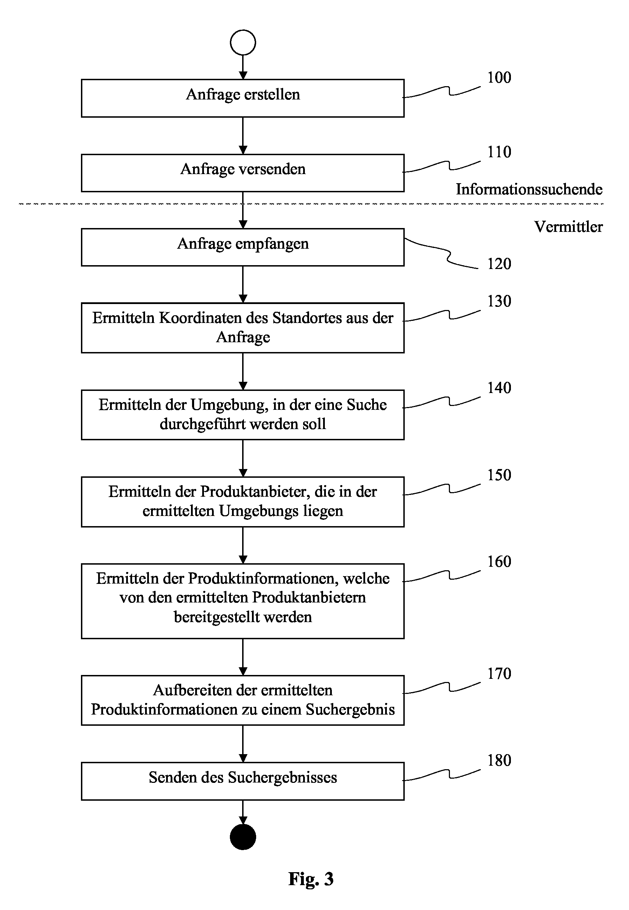

Fig. 3 zeigt ein Flussdiagramm einer Ausführungsform des erfindungsgemäßen Verfahrens. Das Verfahren beginnt auf der Seite des Informationssuchenden mit dem Erstellen einer Anfrage 100. Dabei gibt der Informationssuchende sämtliche Daten in ein Suchformular ein, welche notwendig sind, um eine Suche nach Produktinformationen durchführen zu können. Das Suchformular ist bevorzugt ein HTML- oder WAP-basierendes Formular, welches mehrere Eingabefelder zur Definition der Anfrage aufweist. Zu den Daten zählen der Standort des Informationssuchenden und die Umgebung, in dem die Suche durchgeführt werden soll. Diese notwendigen Daten können durch das System im Suchformular automatisch vorbelegt werden.

Die Vorbelegung des Standortes kann durchgeführt werden, wenn der Informationssuchende über eine Vorrichtung zum automatischen Ermittelndes Standortes, etwa ein GPS-Modul, verfügt. Ein automatisch vorbelegter Standort kann vom Informationssuchenden überschrieben werden. Diese Möglichkeit ist dann besonders vorteilhaft, wenn der Informationssuchende nach Produktangeboten in einem anderen Stadtteil oder in einer anderen Stadt suchen möchte.

Kann eine automatische Vorbelegung nicht erfolgen, etwa weil der Informationssuchende nicht über ein GPS-Modul verfügt oder das GPS-Modul keinen Empfang hat, so hat der Informationssuchende die Möglichkeit, den Standort als Adresse, bestehend aus Straße, Hausnummer und/oder Postleitzahl, einzugeben. Alternativ wird dem Informationssuchenden eine geographische Landkarte zur Verfügung gestellt, aus der er den Standort auswählen kann, etwa durch Mausklick.

Für die Vorbelegung des Umkreises im Suchformular wird ein fest definierter Wert, beispielsweise 500 Meter, verwendet. Das Eingabefeld für den Umkreis stellt dabei zusätzlich die Möglichkeit zur Verfügung, aus mehreren fest definierten Werten auszuwählen, beispielsweise aus zehn Entfernungen mit einer Schrittweite von jeweils 250 Meter oder aus zehn Fahrzeiten mit einer Schrittweite von jeweils 5 Minuten. Sollten der voreingestellte Wert oder die auswählbaren Werte nicht den Anforderungen des Informationssuchenden genügen, so hat dieser zusätzlich die Möglichkeit, einen individuellen Wert unter Angabe der Maßeinheit (Fahrzeit, Gehzeit, Entfernung) einzugeben.

In einer weiteren bevorzugten Ausführungsform weist das Suchformular zusätzliche Eingabefelder, welche weitere Suchkriterien repräsentieren, auf, um die Suche entsprechend den Anforderungen des Informationssuchenden anzupassen. Solche weiteren Eingabefelder sind etwa die Produktkategorie, der maximale Preis und der Name des Händlers.

So lassen sich beispielsweise folgende Suchen definieren:

- Suche alle Angebote zu Digitalkameras im Umkreis von 500 Meter, welche maximal 250 € kosten und vom Händler "XY" angeboten werden.
- Suche alle Angebote zu Digitalkameras im Umkreis von 500 Meter, welche maximal 250 € kosten.
- Suche alle Angebote zu Digitalkameras im Umkreis von 500 Meter.
- Suche alle Angebote im Umkreis von 500 Meter.
- Suche alle Angebote des Händlers "X" im Umkreis von 500 Meter.

In einer besonders bevorzugten Ausführungsform hat der Informationssuchende die Möglichkeit, eine einmal definierte Anfrage zusammen mit einem Benutzerprofil permanent in der Datenbank des Vermittlers zu hinterlegen, um diese zu einem späteren Zeitpunkt wieder zu verwenden. Im Benutzerprofil kann auch ein elektronischer Merkzettel hinterlegt werden, in welchem gefundene Produkte gespeichert werden.

Nachdem die Anfrage durch den Informationssuchenden erstellt worden ist, wird diese im Schritt 110 versandt und vom Vermittler im Schritt 120 empfangen. Das Versenden der Anfrage erfolgt vorzugsweise über das Internet oder über ein Mobilfunknetz.

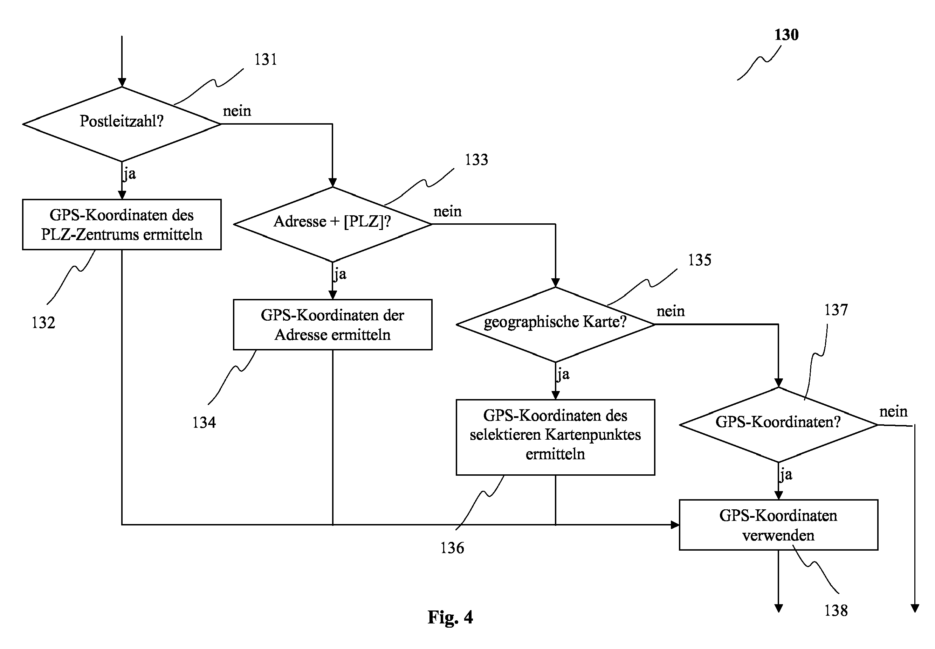

Nach Erhalt der Anfrage durch den Vermittler werden im nächsten Schritt 130 die Koordinaten des Standortes aus der Anfrage ermittelt. Dies wird mit Bezug auf Fig. 4 näher beschrieben.

Fig. 4 zeigt ein Flussdiagramm zum Ermitteln der Koordinaten des Standortes aus der Anfrage gemäß dem Schritt 130 aus Fig. 3. Hierbei werden die Koordinaten in Abhängigkeit davon, wie der Standort in der Anfrage angegeben ist, ermittelt. In einer bevorzugten Ausführungsform hat der Informationssuchende die Möglichkeit, den Standort unter Angabe von Postleitzahl oder Adresse und optional dazu die Postleitzahl oder aus einer geographischen Karte oder unter Angabe von GPS-Koordinaten auszuwählen.

Im Schritt 131 wird geprüft, ob es sich bei dem Standort der Anfrage um eine Postleitzahl handelt. Ist der Standort durch eine Postleitzahl angegeben, ermittelt der Vermittler die GPS-Koordinaten des Zentrums des Postleitzahlengebietes. Die Zentren der einzelnen Postleitzahlengebiete sind hierbei in der Datenbank 40 aus Fig. 1 abgelegt.

Handelt es sich nicht um eine Postleitzahl, wird im folgenden Schritt 133 geprüft, ob es sich um eine Adresse handelt. Bei Angabe von nur der Adresse muss die Stadt, in welcher sich die Adresse befindet, gegeben sein, um eindeutig die Koordinaten bestimmen zu können. Bei zusätzlicher Angabe der Postleitzahl sind die Koordinaten eindeutig bestimmbar. In einer besonders bevorzugten Ausführungsform kann der Vermittler bei unzureichender Angabe der Adresse oder bei Mehrdeutigkeit der Adresse dem Informationssuchenden ein zusätzliches Anfrageformular zur Verfügung stellen, um die Angaben zur Adresse zu vervollständigen oder aus mehreren möglichen Varianten auszuwählen. Sind die Angaben vollständig und eindeutig, ermittelt der Vermittler in Schritt 134 die GPS-Koordinaten zu dieser Adresse. Die GPS-Koordinaten der Adressen sind ebenso in der Datenbank 40 aus Fig. 1 hinterlegt.

Handelt es sich auch nicht um eine Adresse, wird im folgenden Schritt 135 geprüft, ob es sich um eine Auswahl aus einer geographischen Karte handelt. Bei Auswahl aus einer geographischen Karte werden im nachfolgenden Schritt 136 die GPS-Koordinaten zur Auswahl ermittelt. Auch diese GPS-Koordinaten zu den geographischen Karten sind in der Datenbank hinterlegt.

Sollte es sich auch nicht um eine Auswahl aus einer geographischen Karte handeln, wird in Schritt 137 überprüft, ob es sich um GPS-Koordinaten handelt. Handelt es sich um GPS-Koordinaten, werden diese zur weiteren Verarbeitung verwendet. Der Fall, dass es sich auch nicht um GPS-Koordinaten handelt, ist in Fig. 4 nicht dargestellt. In weiteren Ausführungsformen können weitere Varianten zur Bestimmung der Koordinaten des Standortes verwendet werden.

Anschließend an die Schritte 132, 134, 136 und 137 folgt Schritt 138, in dem die GPS-Koordinaten zur weiteren Verarbeitung zur Verfügung gestellt werden.

Zurückkehrend zu Fig. 3, fährt das Verfahren mit Schritt 140 fort, in dem die Umgebung ermittelt wird, innerhalb derer die Suche gemäß Anfrage durchgeführt werden soll.

Die Berechnung des Umkreises erfolgt in Abhängigkeit der in der Anfrage enthaltenen Maßeinheit (Fahrzeit, Gehzeit oder Entfernung). Ausgehend von den in Schritt 130 ermittelten Koordinaten des Standortes des Informationssuchenden wird in diesem Schritt die relevante Fläche ermittelt, welche bei der Suche zu berücksichtigen ist.

In einer Ausführungsform kann die relevante Fläche kreisförmig um den Standort des Informationssuchenden ermittelt werden, wobei der Aktionsradius von der Maßeinheit des angegebenen Umkreises abhängt. In dem Fall, dass es sich bei dem angegebenen Umkreis um eine Entfernung handelt, entspricht der Aktionsradius der relevanten kreisförmigen Fläche genau der angegebenen Entfernung. In den Fällen, in denen der Umkreis unter Angabe von Fahrzeit oder Gehzeit festgelegt wurde, ist zunächst der Aktionsradius aus der Fahrzeit oder der Gehzeit zu ermitteln. Der Aktionsradius kann hierbei linear von der Fahrzeit und Gehzeit abhängig sein.

In einer besonderen Ausführungsform kann die Ermittlung der relevanten Fläche um den Standort unter Zuhilfenahme etwa von Navigationssystemen oder Geoinformationssystemen, welche zusätzliche Informationen zum betrachteten Gebiet bereitstellen, erfolgen. In den Fällen, in denen die Umgebung unter Angabe von Fahrzeit oder Gehzeit festgelegt wurde, würde sich hier im Allgemeinen keine kreisförmige Fläche um den Standort des Informationssuchenden ergeben. Ein Beispiel einer derart berechneten Fläche ist durch 70 in Fig. 2 dargestellt.

Die in Schritt 140 ermittelte Fläche der Umgebung wird in einer Ausführungsform durch eine Liste von GPS-Koordinaten repräsentiert, welche auf der ermittelten Fläche liegen. Im Falle einer kreisförmigen Fläche können die auf dieser Fläche liegenden GPS-Koordinaten durch Angabe des Standortes und des Aktionsradius ermittelt werden.

Die so ermittelte Liste von GPS-Koordinaten ist die Grundlage für den nächsten Schritt 150, in dem die Produktanbieter ermittelt werden, welche auf der ermittelten Fläche liegen. Die Daten der Produktanbieter, welche auch in der Datenbank 40 in Fig. 1 gespeichert sind, enthalten auch ihrer Adresse zugeordnete GPS-Koordinaten. In Schritt 150 werden somit alle Produktanbieter ermittelt, deren GPS-Koordinaten in der Liste der in Schritt 140 ermittelten GPS-Koordinaten enthalten sind. Im Falle einer kreisförmigen Fläche kann diese Überprüfung unter Zuhilfenahme des Standortes und des Aktionsradius durchgeführt werden. Eine Liste von GPS-Koordinaten ist hierbei nicht erforderlich. Alle Produktanbieter, welche diese Kriterien erfüllen, werden in eine Liste von gefundenen Produktanbietern aufgenommen.

Mit Hilfe dieser Liste von gefundenen Produktanbietern wird der nächste Schritt ausgeführt, in dem die verfügbaren Produktinformationen dieser Produktanbieter ermittelt werden. Die einzelnen Produktinformationen sind in der Datenbank eindeutig einem Produktanbieter zugeordnet. Über diese Zuordnung werden die relevanten Produktinformationen ermittelt und in eine Liste gefundener Produktinformation aufgenommen.

In Abhängigkeit davon, ob der Informationssuchende in der Anfrage weitere Suchkriterien angegeben hat, wird die Liste der gefundenen Produktinformationen entsprechend gefiltert. Sind zusätzlich zu den Suchkriterien auch Sortierkriterien angegeben, wird die Liste der gefundenen Produktinformationen gemäß diesen Sortierkriterien sortiert. So kann die Liste der gefundenen Produktinformationen etwa nach Preis oder Anbieter sortiert werden.

Die so erstellte Liste von Produktinformationen wird im nächsten Schritt 170 aufbereitet, damit sie entsprechend dem Ausgabenmedium des Informationssuchenden darstellbar ist. Dieser Schritt umfasst auch das Bereitstellen zusätzlicher Informationen zu den gefundenen Produkten, etwa Beschreibung, Bilder und Gültigkeit des Angebotes.

Im letzten Schritt 180 des erfindungsgemäßen Verfahrens wird die aufbereitete Liste von Produktinformationen gemäß der Anfrage als Suchergebnis zum Informationssuchenden versandt, wobei das Suchergebnis auch in Form einer elektronischen Nachricht z.B. e-Mail, SMS oder MMS verschickt werden kann.

Ist die Liste von gefundenen Produktanbietern leer, wird dem Informationssuchenden eine Nachricht übermittelt, dass sich in dem ihm angegebenen Umkreis keine Produktanbieter befinden. Die Schritte 160 bis 180 werden nicht ausgeführt.

Ist die Liste von gefundenen Produktinformationen leer, wird dem Informationssuchenden eine Nachricht übermittelt, dass keine Produkte gemäß der versendeten Anfrage gefunden wurden. Die Schritte 170 und 180 werden nicht ausgeführt.

In einer bevorzugten Ausführungsform wird auf Anfrage des Informationssuchenden, bevorzugt durch einen Klick auf ein entsprechendes Symbol in der Ergebnisliste, die Route zwischen dem Standort des Informationssuchenden und dem Standort des ausgewählten Produktanbieters berechnet und dargestellt.

In einer ebenfalls besonders bevorzugten Ausführungsform weist das mobile Endgerät des Informationssuchenden ein Navigationssystem auf, in welches der Informationssuchende die Standortdaten eines aus der Ergebnisliste ausgewählten Produktanbieters übernehmen kann. Das Navigationssystem berechnet mit den übergebenen Standortdaten die schnellste oder kürzeste Route zum ausgewählten Produktanbieter und kann den Informationssuchenden auch dort hinnavigieren.

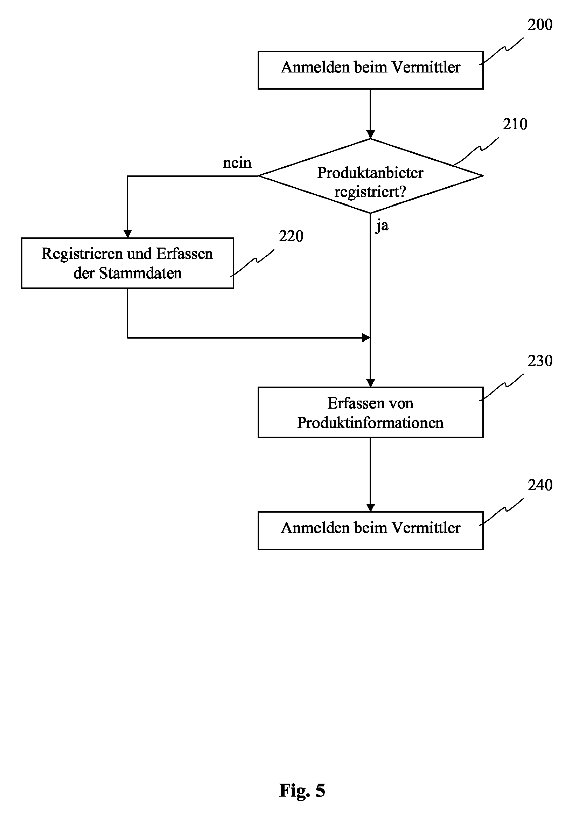

Fig. 5 zeigt ein Flussdiagramm für das Einpflegen der Produktinformationen eines Produktanbieters beim Vermittler. In einem ersten Schritt 200 meldet sich der Produktanbieter beim Vermittler an. Dabei wird im nächsten Schritt 210 geprüft, ob dieser Produktanbieter bereits beim Vermittler registriert ist oder nicht.

Ist dieser noch nicht registriert, wird der Produktanbieter in Schritt 220 aufgefordert, sich zu registrieren und seine Stammdaten zu erfassen. Notwendige Stammdaten des Produktanbieters sind zumindest der Name des Geschäftes, Straße und Hausnummer sowie Postleitzahl. Zusätzlich kann der Produktanbieter auch seine GPS-Koordinaten erfassen. Die erfassten Stammdaten des Produktanbieters werden an den Vermittler übersandt und dort in der Datenbank gespeichert. Vor der Speicherung in der Datenbank wird überprüft, ob in den übersandten Stammdaten die GPS-Koordinaten enthalten sind. Sind diese nicht enthalten, werden die GPS-Koordinaten aus Adresse, Hausnummer und Postleitzahl analog dem im Fig. 4 gezeigten Ablauf ermittelt und zusammen mit den Stammdaten in der Datenbank hinterlegt.

Im nächsten Schritt 230, bzw. nach dem Schritt 210, falls die Überprüfung in Schritt 210 ergeben hat, dass der Produktanbieter bereits registriert ist, kann der Produktanbieter seine Angebote in Form von Produktinformationen beim Vermittler hinterlegen.

Die Produktinformationen können einzelnen erfasst werden. Dazu stellt der Vermittler vorzugsweise ein HTML-Formular zur Verfügung in dem die Daten zu den Produkten eingegeben werden können.

In einer besonders bevorzugten Ausführungsform stellt der Vermittler eine Schnittstelle zur Verfügung, über die es den Produktanbietern ermöglicht wird, Produktinformationen zu einer Vielzahl von Produkte in einem Schritt beim Vermittler einzuspielen. Diese Schnittstelle stellt entsprechende Methoden zur Verfügung, um einen solchen Massenimport zu ermöglichen. Die Methoden umfassen zum Beispiel

- eine Methode, um sich beim Vermittler anzumelden,
- eine Methode, um sich vom Vermittler abzumelden, und
- eine Methode, um Daten, aufweisend Produktinformationen zu einer Vielzahl von Produkten, an den Vermittler zu übertragen.

Die Daten werden hierbei bevorzugt in einer oder mehreren Dateien gespeichert. Das Übertragen von derartigen Dateien kann auch mit dem oben erwähnten HTML-Formular erfolgen. Vorzugsweise sind die Daten im XML-Format gespeichert.

Zusätzlich zu diesen drei Methoden umfassen die Methoden noch

- eine Methode zum Löschen von Produktinformationen,
- eine Methode zum Ändern bereits vorhandener Produktinformationen, und
- eine Methode zum Anlegen einzelner Produktinformationen.

Durch das Bereitstellen einer solchen Schnittstelle zusammen mit den genannten Methoden wird einem Produktanbieter die Möglichkeit zur Verfügung gestellt, das Einspielen von neuen Produktinformation und das Ändern bzw. Löschen von bereits vorhandenen Produktinformation automatisiert durchzuführen, etwa täglich nach Geschäftsschluss. Der Produktanbieter kann seinerseits ein etwa vorhandenes Warenwirtschaftssystem oder ERP-System um eine Schnittstelle erweitern, welche es ihm erlaubt, auf die Schnittstelle des Vermittlers zuzugreifen.

Nach dem Erfassen der Produktinformationen meldet sich der Produktanbieter wieder vom Vermittler ab, Schritt 240.

Insbesondere ermöglicht diese Schnittstelle ein besonderes schnelles und effizientes Einpflegen von Produktinformationen beim Vermittler durch den Produktanbieter. Besonders vorteilhaft ist die Verwendung der Schnittstelle, wenn sich Produktdaten beim Produktanbieter häufig und in großem Umfang ändern. Durch die Integration dieser Schnittstelle in das Warenwirtschafssystem beim Produktanbieter wird es zudem ermöglicht sich im Warenwirtschafssystem ändernde Daten synchron beim Vermittler zu ändern. So kann beispielsweise ein Produkt, wenn es im Warenwirtschafssystem gelöscht wird, zeitgleich aus dem Datenbestand beim Vermittler gelöscht werden.

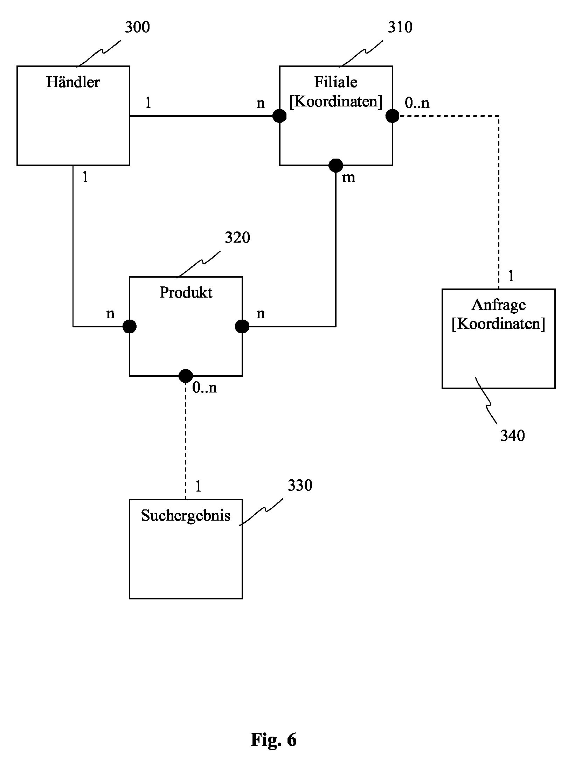

Fig. 6 zeigt ein E/R-Diagramm das dem erfindungsgemäßen Verfahren zugrunde liegende Datenmodell. Ein Produktanbieter 300 (Händler, Dienstleister) kann mehrere Filialen 310 besitzen. In den Daten zu den einzelnen Filialen sind die jeweiligen Koordinaten, vorzugsweise im GPS-Format, gespeichert. Ein Händler 300 kann mehrere Produkte 320 anbieten. Ein Produkt 320 eines Händlers 300 kann mehreren Filialen 310 zugeordnet sein, während einer Filiale 310 wiederum mehrere Produkte zugeordnet sein können. Aus diesen drei Beziehungen ergibt sich, welcher Händler in welcher Filiale, und damit an welchen Orten, welche Produkte anbietet.

Ein Suchergebnis 330 kann keines, eines oder mehrere Produkte 320 enthalten. Durch die Beziehung Produkt ⎯ Händler bzw. Produkt ⎯ Filiale kann im Suchergebnis für die gefundenen Produkte gemäß einer Anfrage die Information, von welchem Händler und in welcher Filiale das Produkt bereitgestellt wird, ermittelt werden.

Eine Anfrage 340, welche zumindest durch die Koordinaten des Standortes definiert ist, kann keiner, einer oder mehreren Filialen 310 zugeordnet werden. Die Zuordnung erfolgt schließlich zwischen den Koordinaten der Filialen und den Koordinaten aus der Anfrage. Ergibt die Zuordnung Anfrage 340 zu Filiale 310, dass die Menge der gefundenen Zuordnungen leer ist, so ist auch die Menge der Zuordnungen Filiale 310 zu Produkt 320 leer. Daraus ergibt sich, dass das Suchergebnis auch leer ist.

Das in Fig. 5 gezeigte Verfahren zum Erfassen von Produktinformation ist dahingehend erweiterbar, dass zusätzlich eine Zuordnung von Produkten zu Filialen Bestandteil der übertragenen Datei ist. Des Weiteren stellt die Schnittstelle Methoden zum Herstellen und Löschen von Zuordnungen zur Verfügung.

Die Händlerdaten 300 umfassen zumindest folgende Informationen:

- Name des Händlers bzw. des Geschäftes,
- Straße / Hausnummer / PLZ,
- Telefon,
- Öffnungszeiten.

Die Filialdaten 310 umfassen zumindest folgende Informationen:

- Eindeutiger Schlüssel des Händlers,
- Koordinaten,
- Straße / Hausnummer / PLZ,
- Telefon,
- Öffnungszeiten.

Durch den eindeutigen Schlüssel des Händlers erfolgt die eindeutige Zuordnung einer Filiale zu einem Händler.

Die Produktdaten 320 umfassen zumindest folgende Informationen:

- Eindeutiger Schlüssel des Händlers,
- Eindeutiger Schlüssel der Filiale,
- Hersteller,
- Produktbeschreibung,
- Preis,
- Gültigkeit des Produktes (von/bis),
- Sichtbarkeit des Produktes (von/bis).

Durch den eindeutigen Schlüssel des Händlers erfolgt die eindeutige Zuordnung eines Produktes zu einem Händler. Falls Produkte nur in einer Filiale angeboten werden, erfolgt die Zuordnung der Produkte zur Filiale durch den eindeutigen Schlüssel der Filiale. In einer bevorzugten Ausführungsform kann ein Händler seine Produkte in mehreren Filialen anbieten. In diesem Fall erfolgt die Zuordnung nicht mehr über den eindeutigen Schlüssel der Filiale sondern über eine eigene Relation zwischen Filiale und Produkt. Diese Relation weist zumindest den Schlüssel der Filiale und den Schlüssel des Produktes auf. Sind etwa der Preis und die Gültigkeit eines Produktes von Filiale zu Filiale unterschiedlich, so sind auch diese Informationen Bestandteil der Relation zwischen Filiale und Produkt. Die Gültigkeit eines Produktes gibt an, in welchem Zeitraum (von/bis) das Angebot zu diesem Produkt gültig ist. Die Sichtbarkeit des Produktes gibt an, in welchem Zeitraum (von/bis) das Angebot zu diesem Produkt für den Informationssuchenden sichtbar, also im Suchergebnis darstellbar, ist. Die Angabe der Sichtbarkeit eines Produktes erlaubt einem Händler Produktangebote zur Verfügung zu stellen, welche vom Informationssuchenden schon vor der Gültigkeit gefunden werden können.

Die Händlerdaten 300, Filialdaten 310 und Produktdaten 320 können jeweils weitere Information umfassen.

Ein Suchergebnis 330 kann alle in den Händlerdaten 300, Filialdaten 310 und Produktdaten 320 enthaltenen Informationen enthalten. Die Produktdaten 320 im Suchergebnis können sich aus den Produktdaten 320 und den Daten der Relation zwischen Filiale und Produkt zusammensetzen.

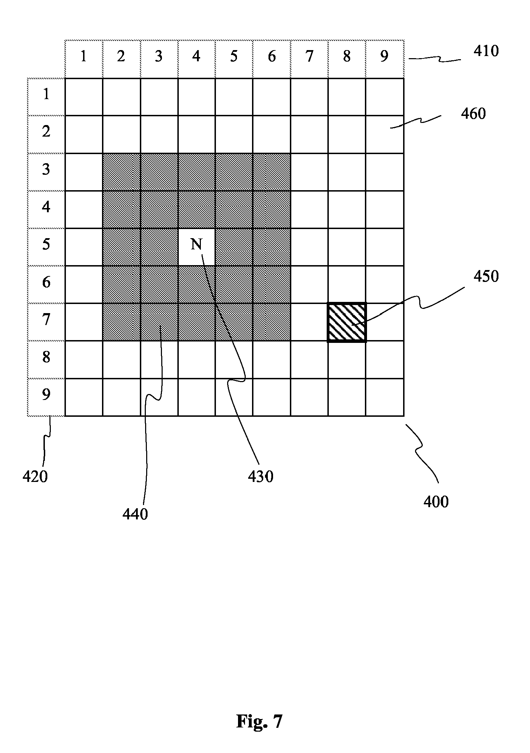

Fig. 7 zeigt die Verwendung eines vorbestimmten Koordinatensystems zur Berechnung des relevanten Umkreises. In einer Ausführungsform kann anstelle der oben genannten GPS-Koordinaten ein zweidimensionales kartesisches Koordinatensystem zur Berechnung der Umgebung verwendet werden. Die zu betrachtendes Fläche, etwa eine Stadt, wird hierbei durch das Koordinatensystem 400 beschrieben. Das Koordinatensystem 400 wird in Breitengrade 410 und Längengrade 420 eingeteilt. Die Längen- und Breitengrade 420 und 410 teilen dabei die zu betrachtende Fläche in eine Vielzahl von Zellen 460 ein. Der Standort des Informationssuchenden 430 entspricht dabei einer Zelle in dem Koordinatensystem. Der in Fig. 7 gezeigte Standort 430 liegt auf dem Breitengrad 4 und Längengrad 5. Der Umkreis wird hier durch Angabe des maximalen Abstandes der Zellen zum Standort festgelegt. Bei einem maximalen Abstand von zwei Zellen, wie in Fig. 7 gezeigt, ergibt sich ein Umkreis 440 zum Standort 430.

Bei Verwendung eines kartesischen Koordinatensystems sind die Standorte der Produktanbieter in der Datenbank als Zellen des kartesischen Koordinatensystems gespeichert. Die Zelle des Standortes 450 eines Händlers, welcher nicht im relevanten Bereich gemäß einer Anfrage liegt, weist hier den Breitengrad 8 und den Längengrad 7 auf.

Enthält die Anfrage eines Informationssuchenden den Standort in Form von GPS-Koordinaten, weil etwa der Standort des Informationssuchenden automatisch durch ein GPS-Modul ermittelt wurde, müssen diese in Schritt 130 (Fig. 3) in Längen- und Breitengrade umgewandelt werden.

Der Umkreis, in dem die Suche durchgeführt werden soll (Schritt 140, Fig. 3), muss bei Verwendung eines kartesischen Koordinatensystems folgende Bedingung erfüllen:

$$(B \geq B_I - A) \quad \text{UND} \quad (B \leq B_I + A) \quad \text{UND} \quad (L \geq L_I - A) \quad \text{UND} \quad (L \leq L_I + A)$$

mit

B... Breitengrad
$B_I$... Breitengrad des Informationssuchenden
L... Längengrad
$L_I$... Längengrad des Informationssuchenden
A... maximaler Abstand zum Standort

Für A = 2 erfüllen die in Fig. 7 angegebenen Zellen der Fläche 440 diese Bedingung. Die Zelle 450 hingegen erfüllt diese Bedingung nicht.

In einer weiteren Ausführungsform stellt das erfinderische Verfahren Mittel zur Verfügung, die angebotenen Dienste des Vermittlers gegenüber den Produktanbietern abzurechnen.

Dem Produktanbieter wird dabei etwa pro angebotenes Produkt und Zeitintervall ein bestimmter Betrag in Rechnung gestellt. Dem Produktanbieter wird zusätzlich zum einfachen Anbieten von Produkten die Möglichkeit bereitgestellt, bestimmte Produkte bevorzugt anzubieten, etwa durch ein bevorzugtes Ranking in der Ergebnisliste oder durch Darstellung eines angebotenen Produktes als speziellen Spartipp. Nimmt ein Produktanbieter solche Möglichkeiten wahr, wird dies in der Abrechnung berücksichtigt.

Eine weitere Form der Abrechnung ist durch die Abrechnung pro selektiertem Produkt aus der Ergebnisliste realisiert. Die Selektion erfolgt dabei vorzugsweise durch einen Klick auf das Produkt. Bei dieser Form der Abrechnung wird pro selektiertem Produkt ein bestimmter Betrag des Produktanbieters an den Vermittler fällig. Hierzu sind Mittel zum Erfassen der Klicks auf das jeweilige Angebot im Web vorgesehen.

Eine dritte Form der Abrechnung erfolgt durch die Abrechnung pro vom Vermittler zum Informationssuchenden übertragener Ergebnisliste. Die in der Ergebnisliste dargestellten Produkte sind jeweils eindeutig einem Produktanbieter zugeordnet und werden mit diesem abgerechnet. Nimmt ein Produktanbieter Möglichkeiten wahr seine Produkte in der Ergebnisliste etwa durch bevorzugtes Ranking bevorzugt anzubieten, wird dies in dieser Form der Abrechnung berücksichtigt.

Die Erstellung einer Abrechnung wird durch den Vermittler automatisiert durchgeführt.

In einer bevorzugten Ausführungsform weist der Vermittler ein Verwaltungsprogramm auf. Das Verwaltungsprogramm weist zumindest eine Vorrichtung zum Empfangen von Anfragen, zur Bearbeitung von Anfragen, zum Verschicken der Ergebnisliste und zum Pflegen der Produktinformationen auf. Die Vorrichtung zum Empfangen von Anfragen und zum Verschicken der Ergebnisliste ist vorzugsweise ein Webserver. Der Webserver kann dabei skaliert ausgeführt sein. Des Weiteren weist der Vermittler zusätzliche Vorrichtungen, zum Beispiel ein WAP-Gateway zum Empfangen von Anfragen von einem WAP-fähigem Endgerät, auf, um Anfragen unterschiedlicher Endgeräte empfangen zu können. Die Vorrichtung zum Verschicken der Ergebnisliste weist zusätzlich einen Mail-Server auf, um auch Ergebnislisten in Form einer e-Mail verschicken zu können. Für das Verschicken der Ergebnisliste als SMS weist die Vorrichtung auch ein SMS-Gateway auf. Die Vorrichtung zum Bearbeiten der Anfragen ist vorzugsweise so ausgeführt, dass mehrere Anfragen parallel bearbeitet werden können. In einer ganz besonderen Ausführungsform ist auch die Vorrichtung zum Bearbeiten der Anfragen skaliert ausgeführt.

In einer besonderen Ausführungsform kann der Informationssuchende eine Anfrage auch in Form einer SMS unter Angabe von Standort und Umkreis und evtl. weiteren Suchkriterien an den Vermittler senden. Die Ergebnisliste wird hierbei vom Vermittler in Form einer SMS dem Informationssuchenden zugestellt.

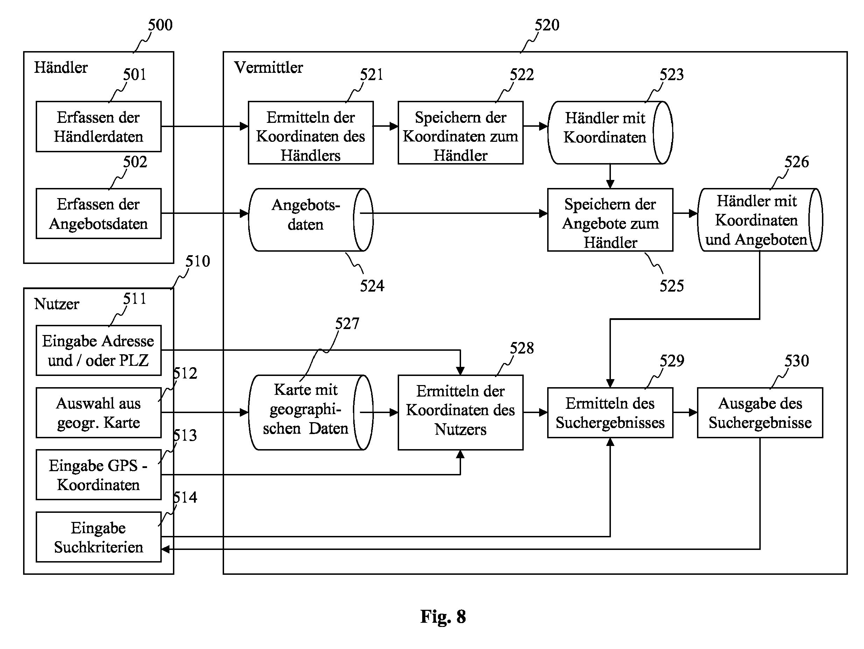

Fig. 8 zeigt nochmals zusammenfassend ein Blockdiagramm zur Veranschaulichung der Zusammenhänge der einzelnen Verfahrensschritte gemäß Fig. 3 bis Fig. 5.

Der Produktanbieter bzw. Händler 500 erfasst Händlerdaten 501 und Angebotsdaten 502 zu den Produkten, welche er dem Vermittler 520 zur Verfügung stellen möchte. Die erfassten Händlerdaten werden an den Vermittler 520 übertragen, wo zunächst die Koordinaten, bevorzugt GPS-Koordinaten, des Händlers ermittelt werden, sofern diese vom Händler 500 nicht schon als GPS-Koordinaten zur Verfügung gestellt wurden. Als Nächstes werden dann die übertragenen Händlerdaten und die dazu ermittelten Koordinaten gespeichert, 522. Die Händlerdaten und die dazugehörigen Koordinaten stehen dann in einer Händlerdatenbank 523 zur Verfügung. Die erfassten Angebotsdaten werden an den Vermittler 520 übertragen und dort in einer Angebotsdatenbank 524 gespeichert. Nach dem Speichern der Angebotsdaten werden diese mit den entsprechenden Händlerdaten aus der Händlerdatenbank in Beziehung gebracht 525. Diese Beziehungen werden in einer Händler-Angebots-Datenbank 526 gespeichert.

Der Nutzer bzw. Informationssuchende 510 defmiert eine Suche unter Angabe seines Standortes und weiterer Suchkriterien 514. Es der weiteren Suchkriterien ist der oben erwähnte Umkreis. Der Standort kann dabei unter Angabe von Adresse und/oder Postleitzahl 511, durch Auswahl aus einer geographischen Karte 512 oder unter Angabe der GPS-Koordinaten 513 bestimmt werden. Die GPS-Koordinaten 513 werden vorzugsweise automatisch von einem beim Informationssuchenden 510 vorhandenen GPS-Modul ermittelt.

Der Standort und die weiteren Suchkriterien werden an den Vermittler 520 übertragen. Ist der Standort als Auswahl aus einer geographischen Karte gegeben, werden mit Hilfe beim Vermittler 520 hinterlegter geographischer Daten 527 die Koordinaten des Standortes ermittelt 528. Ebenso werden in den anderen Fällen 511 und 513 die Koordinaten des Standortes ermittelt 528.

Gemäß den ermittelten Koordinaten 528, den angegebenen Suchkriterien 514 und den Daten aus der Händler-Angebots-Datenbank 526 wird das Suchergebnis ermittelt 529. Das Suchergebnis wird aufbereitet und an den Nutzer 510 zur Ausgabe verschickt 530.

Die Daten der gezeigten Datenbanken 524, 523, 526 und 527 werden vorzugsweise in einer gemeinsamen Datenbank gespeichert.

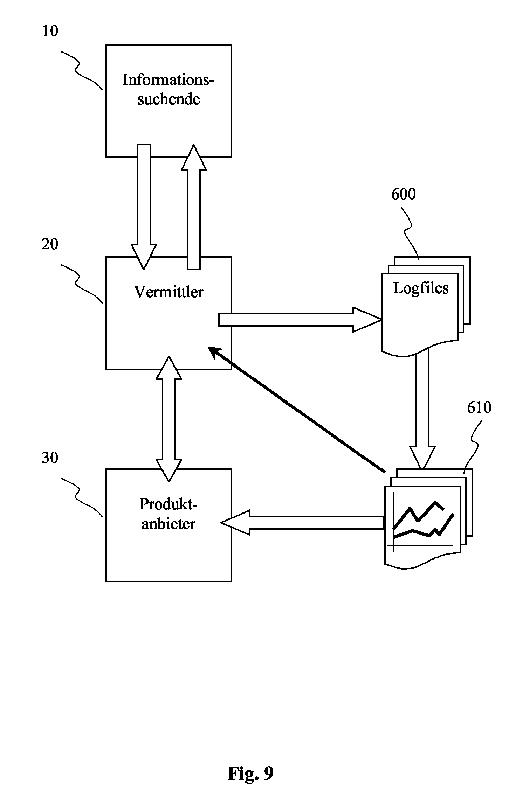

In einer weiteren Ausführungsform stellt das Verfahren Mittel zur statistischen Auswertung zur Verfügung. Fig. 9 zeigt ein Ablaufdiagramm einer statistischen Auswertung. Bevorzugt wird dabei das Nutzerverhalten der Informationssuchenden mit statistischen Methoden ausgewertet. Die Aktionen, welche der Informationssuchende 10 an seinem Endgerät ausführt, werden an den Vermittler 20 übertragen. Diese Aktionen können beispielsweise sein:

- Suche nach Produktangeboten in der näheren Umgebung
- Auswahl eines Produktes aus der Ergebnisliste oder
- Speichern eines Produktes im elektronischen Merkzettel.
Der Vermittler 20 empfängt diese Aktionen und speichert alle relevanten Informationen dazu in einer oder mehreren Log-Dateien 600. Welche Informationen zu einer Aktion relevant sind hängt von der jeweils ausgeführten Aktion ab. Bei der Suche nach Produktangeboten in der näheren Umgebung etwa sind relevante Informationen das gesuchte Produkt, der Standort, in dessen näherer Umgebung gesucht wurde, die Produktkategorie, Datum und Uhrzeit der Suche und weitere Suchkriterien wie Preis oder Hersteller. Beim Speichern der relevanten Informationen zu den Aktionen des Informationssuchenden 10 kann etwa pro Produkt eine Log-Datei oder pro Zeitintervall z.B. täglich oder wöchentlich, eine Log-Datei erzeugt werden. Die Log-Dateien werden bevorzugt in einer strukturierten Datei, besonders bevorzugt in einer Datenbank, gespeichert.

Automatisch oder auf Anforderung wird eine statistische Auswertung 610 aus den Log-Dateien 600 erzeugt. Diese Auswertungen 610 können etwa zyklisch automatisiert, auf Anforderung durch den Vermittler 20 oder durch den Produktanbieter 30 erzeugt werden. Automatisiert oder auf Anforderung durch den Vermittler 20 erzeugte Auswertungen 610 stehen dem Vermittler zur Verfügung und können vom Vermittler 20 auch dem Produktanbieter 30 zur Verfügung gestellt werden. Auf Anforderung durch den Produktanbieter 30 erzeugte Auswertungen stehen dem Produktanbieter 30 zur Verfügung. Dem Produktanbieter 30 steht dabei eine Vielzahl vordefinierter Auswertungsvorlagen zur Verfügung. Des Weiteren kann der Produktanbieter 30 auch Auswertungen 610 nach seinen Vorstellungen erstellen. Der Produktanbieter kann nur Auswertungen 610 erstellen, welche seine dem Vermittler 20 bereitgestellten Produkte betreffen.

Auswertungen 610 über alle beim Vermittler 20 von mehreren Produktanbietern 30 zur Verfügung gestellte Produkte kann nur der Vermittler 20 erstellen. Solche Auswertungen 610 über Produkte von mehreren Produktanbietern 30 können durch den Vermittler 20 in anonymisierter Form den Produktanbietern 30 zur Verfügung gestellt werden.

Durch Auswertungen 610 kann ein Produktanbieter 30 etwa folgende Fragestellungen beantworten:

- Wie oft wurden meine Produkte gesucht?
- Zu welchen meiner Produkte aus der Ergebnisliste haben die Informationssuchenden nähere Informationen angefordert?
- In welchen Filialen wurde gesucht?

Der Produktanbieter 30 kann dadurch sein Produktangebot noch individueller an die Kundenwünsche anpassen, beispielsweise indem ein Produkt, zu dem selten nähere Informationen angefordert wurden, besonders angeboten wird, etwa indem dieses Produkt beim Informationssuchenden besonders hervorgehoben dargestellt wird.

Für den Vermittler 20 sind etwa folgende Fragestellungen interessant:

- In welchen Postleitzahlengebieten wird die Suche besonders oft oder besonders selten in Anspruch genommen?
- Für welches Produkt (anbieterunabhängig) interessieren sich die Informationssuchenden 10 in einem Postleitzahlengebiet ganz besonders?
- Wie navigieren die Informationssuchenden 10 durch das Angebot?

Der Vermittler 20 kann sein Angebot so genauer an das Nutzerverhalten der Informationssuchenden 10 anpassen. Beispielsweise kann er seinen Dienst in Postleitzahlenbereichen, in denen die Suche selten in Anspruch genommen wird, vermehrt bewerben. Informationen über besonders oft gesuchte Produkte in einem bestimmten Postleitzahlenbereich kann der Vermittler 20 den Produktanbietern 30 aus diesem Postleitzahlenbereich kostenlos oder gegen Entgelt zur Verfügung stellen.

Insgesamt werden dem Vermittler 20 und den Produktanbietern 30 durch die Auswertungen 610 Informationen zur Verfügung gestellt, um sich besser den Kundenwünschen und Nutzerverhalten anpassen zu können.

Das erfmdungsgemäße Verfahren stellt somit die Möglichkeit zur Verfügung, Produktangebote in der Umgebung eines Informationssuchenden über unterschiedlichste Endgeräte (Computer, Mobiltelefon, PDA) und auf unterschiedlichste Weise (Internet, WAP, SMS) zu suchen. Eine Schnittstelle zum Pflegen der Produktdaten durch den Produktanbieter, auch in Echtzeit, gewährleistet eine sehr hohe Aktualität der angebotenen Produktinformationen.

**Patentansprüche**

1. Verfahren zum rechnergestützten Ermitteln von Produktinformation gemäß einer Anfrage eines Informationssuchenden aus einer Vielzahl von Produktinformationen, die von einer Vielzahl von Anbietern in Verbindung mit den Standorten der jeweiligen Anbieter bereitgestellt werden, wobei das Verfahren die folgenden Schritte aufweist:

   - Empfangen einer Anfrage eines Informationssuchenden, wobei die Anfrage eine gewünschte Produktinformation und einen Standort kennzeichnet;
   - Ableiten des Standortes aus der Anfrage;
   - Ermitteln der Anbieter in der Datenbank, deren Standorte innerhalb einer vorbestimmten Umgebung zu dem abgeleiteten Standort liegen;
   - Suchen der gewünschten Produktinformation in der Datenbank aus den von den ermittelten Anbietern bereitgestellten Produktinformationen; und
   - Senden der gefundenen Produktinformationen in Verbindung mit den ermittelten Anbietern der Produktinformation an den Informationssuchenden.

2. Verfahren nach Anspruch 1, wobei der Standort des Informationssuchenden und der Anbieter mittels mindestens einer der folgenden Angaben abgeleitet wird:

   - Adresse;
   - Koordinaten eines vorbestimmten Koordinatensystems;
   - Landkarte.

3. Verfahren nach Anspruch 1, wobei ein Standort auf der Basis eines geographisches Koordinatensystems, eines Gauß-Krüger-Koordinatensystem, eines UTM-Koordinatensystems und/oder eines WGS84-Koordinatensystems abgeleitet wird.

4. Verfahren nach einem der vorherigen Ansprüche, wobei die Anfrage weitere Suchkriterien zur Einschränkung des Suche aufweist.

5. Verfahren nach Anspruch 4, wobei das Ermitteln der Produktinformationen für jeden Anbieter aus der Liste gefundener Anbieter folgende Unterschritte umfasst:

   - Lesen der Produktinformationen des Anbieters in der Datenbank;
   - Überprüfen für jede gelesene Produktinformation, ob diese den Suchkriterien gemäß der Anfrage entspricht;
   - Aufnehmen der Produktinformation in eine Liste gefundener Produktinformationen, sofern die gelesene Produktinformation den Suchkriterien entspricht.

6. Verfahren nach einem der vorhergehenden Ansprüche, wobei die Anfrage die Umgebung für die Suche aufweist.

7. Verfahren nach Anspruch 6, wobei die Umgebung durch Angabe von maximaler Entfernung, maximaler Fahrzeit, und/oder maximaler Gehzeit spezifizierbar ist.

8. Verfahren nach einem der vorhergehenden Ansprüche, wobei die Koordinaten der Adressen und der geographischen Landkarten gemäß einem vorbestimmten Koordinatensystem in der Datenbank gespeichert sind.

9. Verfahren nach einem der vorhergehenden Ansprüche, weiter aufweisend:

   Auswerten der Zugriffe der Informationssuchenden auf die Produktinformationen gemäß zumindest einer statistischen Methode, wobei die Zugriffe der Informationssuchenden auf die Produktinformationen in einer Datei mitprotokolliert werden.

10. Verfahren nach einem der vorhergehenden Ansprüche, weiter aufweisend:

    Abrechnen der bereitgestellten Produktinformationen gegenüber den Anbietern gemäß einer Abrechnungsmethode.

11. Verfahren nach Anspruch 10, wobei die Abrechnungsmethode umfasst:

- Abrechnung jeder durch den Produktanbieter bereitgestellten Produktinformation und Zeitintervall;
- Abrechnung jedes ausgewählten Produkts aus dem Suchergebnis durch den Informationssuchenden; und/oder
- Abrechnung jeder in einem Suchergebnis dem Informationssuchenden gesendeten Produktinformation.

12. Verfahren nach einem der vorhergehenden Ansprüche, wobei die gesendeten ermittelten Produktinformationen mittels eines dem Informationssuchenden zugeordneten mobilen oder fixen Endgeräts darstellbar sind.

13. Verfahren nach Anspruch 12, wobei der Standort gemäß Anfrage durch das zugeordnete Endgerät automatisch bestimmt wird.

14. Verfahren nach Anspruch 13, wobei zu einem ausgewählten Eintrag aus dem Suchergebnis eine Route zwischen dem Standort gemäß Anfrage und dem Standort des Produktanbieters der Produktinformation aus dem Suchergebnis berechnet und dargestellt wird.

15. Verfahren nach einem der Ansprüche 12 bis 14, wobei das Endgerät ein Navigationssystem aufweist, in welches die Standortdaten aus dem ausgewählten Eintrag des Suchergebnisses übertragbar sind und die Route zwischen dem Standort des Informationssuchenden und dem Standort des ausgewählten Produktanbieters berechnet wird.

16. Vorrichtung zur Durchführung des Verfahrens gemäß einem der vorherigen Ansprüche.

17. Computerprogrammprodukt, aufweisend Programmcode zur DurcMührung des Verfahrens gemäß einem der Ansprüche 1 bis 15, wenn es in ein Computersystem geladen wird.

**Fig. 1**

**Fig. 2**

**Fig. 2a**

**Fig. 2b**

Anfrage erstellen — 100

Anfrage versenden — 110

Informationssuchende

Vermittler

Anfrage empfangen — 120

Ermitteln Koordinaten des Standortes aus der Anfrage — 130

Ermitteln der Umgebung, in der eine Suche durchgeführt werden soll — 140

Ermitteln der Produktanbieter, die in der ermittelten Umgebungs liegen — 150

Ermitteln der Produktinformationen, welche von den ermittelten Produktanbietern bereitgestellt werden — 160

Aufbereiten der ermittelten Produktinformationen zu einem Suchergebnis — 170

Senden des Suchergebnisses — 180

**Fig. 3**

130

131

Postleitzahl? nein

ja

GPS-Koordinaten des
PLZ-Zentrums ermitteln

132

133

Adresse + [PLZ]? nein

ja

GPS-Koordinaten der
Adresse ermitteln

134

135

geographische Karte? nein

ja

GPS-Koordinaten des
selektieren Kartenpunktes
ermitteln

136

137

GPS-Koordinaten? nein

ja

GPS-Koordinaten
verwenden

138

**Fig. 4**

200

Anmelden beim Vermittler

210

nein ← Produktanbieter registriert?

ja

220

Registrieren und Erfassen der Stammdaten

230

Erfassen von Produktinformationen

240

Anmelden beim Vermittler

**Fig. 5**

300

310

Händler

Filiale
[Koordinaten]

1          n          0..n

1                        m

320

Produkt

n                        n

0..n

Anfrage
[Koordinaten]

1

340

1

Suchergebnis          330

**Fig. 6**

**Fig. 7**

500

**Händler** 501

Erfassen der Händlerdaten

502

Erfassen der Angebotsdaten

510

**Nutzer** 511

Eingabe Adresse und / oder PLZ

512

Auswahl aus geogr. Karte

513

Eingabe GPS - Koordinaten

514

Eingabe Suchkriterien

520

**Vermittler**

521

Ermitteln der Koordinaten des Händlers

522

Speichern der Koordinaten zum Händler

523

Händler mit Koordinaten

524

Angebots- daten

525

Speichern der Angebote zum Händler

526

Händler mit Koordinaten und Angeboten

527

Karte mit geographi- schen Daten

528

Ermitteln der Koordinaten des Nutzers

529

Ermitteln des Suchergebnisses

530

Ausgabe des Suchergebnisse

**Fig. 8**

EP 1 742 175 A1

10

Informationssuchende

600

20

Vermittler

Logfiles

610

30

Produktanbieter

**Fig. 9**

**Europäisches Patentamt**

## EUROPÄISCHER RECHERCHENBERICHT

Nummer der Anmeldung

EP 05 10 6173

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (IPC) |
|---|---|---|---|
| X | WO 01/17812 A (VOLKSWAGEN AKTIENGESELLSCHAFT; HEISE, GILBERT; DIRKSEN, SUSANNE; BUSSE) 15. März 2001 (2001-03-15) * Seite 4 - Seite 5; Abbildungen 2,4,5 * ----- | 1-17 | G06F17/60 |
| X | US 2003/229441 A1 (PECHATNIKOV MICHAEL ET AL) 11. Dezember 2003 (2003-12-11) * Zusammenfassung; Abbildungen 4,20B,20C * * Absätze [0130] - [0141], [0165], [0179], [0191], [0220] * ----- | 1-17 | |
| X | US 6 295 502 B1 (HANCOCK S. LEE ET AL) 25. September 2001 (2001-09-25) * Zusammenfassung * ----- | 1-17 | |
| X | US 6 377 886 B1 (GOTOU SHINICHIROU ET AL) 23. April 2002 (2002-04-23) * Zusammenfassung; Abbildungen 3-6 * * Spalte 4, Zeile 33 - Spalte 5, Zeile 45 * ----- | 1-17 | |
| A | US 2003/195695 A1 (MARUYAMA KISHIKO ET AL) 16. Oktober 2003 (2003-10-16) * Zusammenfassung * ----- | 1-17 | **RECHERCHIERTE SACHGEBIETE (IPC)** G06F |

Der vorliegende Recherchenbericht wurde für alle Patentansprüche erstellt

| Recherchenort | Abschlußdatum der Recherche | Prüfer |
|---|---|---|
| München | 16. November 2005 | Hopper, E |

KATEGORIE DER GENANNTEN DOKUMENTE

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder nach dem Anmeldedatum veröffentlicht worden ist
D : in der Anmeldung angeführtes Dokument
L : aus anderen Gründen angeführtes Dokument

........................................................................

& : Mitglied der gleichen Patentfamilie, übereinstimmendes Dokument

EPO FORM 1503 03.82 (P04C03)

## ANHANG ZUM EUROPÄISCHEN RECHERCHENBERICHT
## ÜBER DIE EUROPÄISCHE PATENTANMELDUNG NR.

EP 05 10 6173

In diesem Anhang sind die Mitglieder der Patentfamilien der im obengenannten europäischen Recherchenbericht angeführten Patentdokumente angegeben.
Die Angaben über die Familienmitglieder entsprechen dem Stand der Datei des Europäischen Patentamts am
Diese Angaben dienen nur zur Unterrichtung und erfolgen ohne Gewähr.

16-11-2005

| Im Recherchenbericht angeführtes Patentdokument | | Datum der Veröffentlichung | Mitglied(er) der Patentfamilie | | Datum der Veröffentlichung |
|---|---|---|---|---|---|
| WO 0117812 | A | 15-03-2001 | AT | 261361 T | 15-03-2004 |
| | | | CN | 1372516 A | 02-10-2002 |
| | | | DE | 19941973 A1 | 03-05-2001 |
| | | | EP | 1214216 A1 | 19-06-2002 |
| | | | ES | 2216956 T3 | 01-11-2004 |
| | | | JP | 2003508769 T | 04-03-2003 |
| | | | US | 6956470 B1 | 18-10-2005 |
| US 2003229441 | A1 | 11-12-2003 | US | 2005033511 A1 | 10-02-2005 |
| US 6295502 | B1 | 25-09-2001 | WO | 0050844 A1 | 31-08-2000 |
| US 6377886 | B1 | 23-04-2002 | KEINE | | |
| US 2003195695 | A1 | 16-10-2003 | KEINE | | |

EPO FORM P0461

Für nähere Einzelheiten zu diesem Anhang : siehe Amtsblatt des Europäischen Patentamts, Nr.12/82